# EUROPEAN PATENT SPECIFICATION

(11) **EP 0 576 091 B1**
(45) Date of publication and mention of the grant of the patent: **22.01.1997**
(21) Application number: 93201788.2
(22) Date of filing: 21.06.1993
(51) Int. Cl.: C08F 38/00

(54) **Polymerization of acetylenes**
Polymerisation von Acetylene
Polymérisation d'acétylènes

(30) Priority: 23.06.1992 EP 92201847
(43) Date of publication of application: 29.12.1993
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Pello, Dennis Humphrey Louis, NL-1031 CM Amsterdam (NL)

(56) References cited:
- DE-A- 3 237 736

## Description

The invention relates to a process for the polymerization of acetylenically unsaturated compounds.

The polymerisation of acetylenes, whereby an acetylenically unsaturated compound is contacted with a catalyst, is known in the art.

According to US 3,883,570 acetylene is polymerized by heating, under autogenic pressure, the monomer, a bis(diethylaminomethyl)-1,2-phenylene-dipalladium compound as catalyst and o-dichlorobenzene as solvent, for 8 hours at 200 °C.

The polymerization of aromatic compounds containing at least one ethynylgroup as substituent is disclosed in JP-A-82/198743. The catalyst consists of a palladium compound, a triorganophosphine, a cuprous salt and an organic amine.

It would be of advantage to provide a process for the polymerization of various acetylenically unsaturated compounds with the aid of a catalyst allowing the use of relatively mild reaction conditions.

Surprisingly, it has now been found that improved results are achieved by using a catalyst system based on specific bidentate ligands.

The invention may be defined as relating to a process for the polymerisation of acetylenically unsaturated compounds by contacting the monomers under polymerization conditions with a catalyst system obtainable by combining
a) a source of cations of one or more Group VIII metals
b) a bidentate ligand, containing phosphorus, arsenic and/or antimony and
c) a source of anions.

As source of cations of Group VIII metals on which the catalyst system of the invention is based, conveniently a salt of one or more Group VIII metals is used. Preferred Group VIII metals are palladium, rhodium, ruthenium and nickel. Palladium is in particular preferred. If desired catalysts may be used comprising cations of more than one Group VIII metal, e.g. cations of palladium and rhodium.

Suitable salts of Group VIII metals are mineral salts, such as sulphates, nitrates and phosphates. In view of their corrosivity, halides are not recommended. Further examples of suitable salts are salts of sulphonic acids, such as methane sulphonic acid, trifluoro methanesulphonic acid and p-toluene sulphonic acid and salts of carboxylic acids, such as acetic acid, halo acetic acids for example trifluoro- and trichloroacetic acid, oxalic acid and citric acid.

As source of cations of Group VIII metals use may also be made of the metals in their elemental form or in a zero-valent state, e.g. in complex form with carbonmonoxide. Preferably these sources are applied in combination with a protonic acid such as sulphuric acid or nitric acid.

It has been found that catalyst systems based on bidentate ligands exhibit a significantly higher activity than catalysts in which only mono-dentate ligands occur. Furthermore it appears that with catalysts having ligands containing phosphorus, arsenic and/or antimony atoms, better results are obtained than with catalysts based on ligands, comprising other coordinating atoms such as nitrogen or sulphur atoms.

Suitable catalyst systems of the invention accordingly contain bidentate ligands comprising at least two atoms selected from phosphorus, arsenic and antimony atoms coordinated with a Group VIII metal.

Preferably, ligands are selected, comprising two arsenic, two antimony or, in particular, two phosphorus atoms.

Ligands comprising in addition one or more other atoms, capable of coordinating with the Group VIII metal, e.g. one or more further phosphorus atoms, are not precluded.

A particular preferred category of bidentate ligands may be indicated by the general formula

R¹R²M¹RM²R³R⁴ (I)

wherein M¹ and M² are different or, preferably, the same atoms selected from phosphorus, arsenic and antimony, R is a divalent organic bridging group containing from 1 to 10 atoms in the bridge and R¹, R², R³ and R⁴ each represent independently a substituted or non-substituted hydrocarbylgroup.

The divalent organic bridging group R preferably contains from 2 to 6, more preferably from 2 to 4 atoms in the bridge, at least 2 of which are carbon atoms. Accordingly in the event only two bridging atoms are present, both bridging atoms are carbon atoms. If more bridging atoms are present, preferably at least the two terminal bridging atoms are carbon atoms whereas the remaining bridging atom(s) may also be carbon atoms or hetero atoms, such as oxygen or silicon atoms, with the proviso that in the bridge two carbon atoms are adjacent to each heteroatom.

Suitable examples of R include -CH₂-CH₂-, -CH₂-CH₂-CH₂-, -CH₂-O-CH₂-O-CH₂-, -CH₂-CH₂-CH₂-CH₂- and -CH₂-Si(CH₃)₂-CH₂-. Most preferably R represents a group -CH₂-CH₂-CH₂-.

The substituted or non substituted hydrocarbyl groups in formula (I), represented by R¹, R², R³ and R⁴ may be aliphatic, cycloaliphatic or aromatic.

Preferably R¹, R², R³ and R⁴ represent the same or different substituted or non-substituted aliphatic groups having from 1 to 10 carbon atoms. R¹ and R² and/or R³ and R ⁴ may also together form a divalent aliphatic group, thus forming together with M¹ or M², respectively, a cyclic structure. The aliphatic groups represented by R¹, R², R³ and/or R³ may be branched or have straight chains.

Suitable examples include methyl, ethyl, propyl, isopropyl, n-butyl, sec.butyl, tertiary butyl, pentyl, n-hexyl, neohexyl, cyclopentyl and octylgroups. Tertiary alkylgroups having from 4 to 10 carbon atoms in particular tertiary butylgroups, are preferred.

As indicated above, in formula (I) R¹, R², R³ and/or R⁴ may represent a substituted hydrocarbylgroup. Suitable substituents which do not substantially impair the catalytic activity of the catalyst system may be selected from halogen atoms, such as chlorine and bromine atoms, alkoxy groups, such as methoxy and ethoxygroups, cyanogroups, amino-, monoalkyl- and dialkylaminogroups.

The source of anions, participating in the catalyst system of the invention may be a source of OH⁻ groups, such as water, a source of (OR⁵)⁻ ions wherein R⁵ represents an alkylgroup, such as an alkanol, preferably having from 1 to 8 carbon atoms for example methanol, ethanol or isopropanol, or a source of 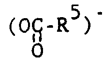 ions such as a carboxylic acid, for example acetic acid or propionic acid. A preferred source of anions is formed by the acids from which the above-mentioned Group VIII metal salts are derived. Sulphonic acids such as methane sulphonic acid and trifluoromethanesulphonic acid are in particular recommended sources of anions. Very suitable are in general acids having a pKa of less than 6, in particular of less than 4. Acids having a pKa of less than 2 are most preferred.

Another suitable source of anions is formed by a salt of any of the aforesaid acids, in particular salts of non-noble transition metals, such as copper, chromium and tin.

The amount of catalyst used in the process of the invention is not critical and may vary between wide limits. Conveniently the amount of Group VIII metal in the catalyst is in the range of from 10⁻⁷ to 10⁻¹ gram atom metal per mole of acetylenically unsaturated compound, in particular in the range of from 10⁻⁶ to 10⁻² on the same basis.

The amount of bidentate ligand is suitably selected in the range of from 0.5 to 10 moles of ligand per gram atom of Group VIII metal, although if desired lower or higher amounts may be used. In particular the amount of bidentate ligand is selected in the range of from 1 to 4 moles of ligand per gram atom of metal.

The amount of moles of anions is preferably in excess of the amount of gram atoms of Group VIII metal. Advantageously the amount of moles of anions is in the range of from 1 to 100, preferably in the range of from 2 to 50 per gram atom of metal. It will be appreciated that if the Group VIII metal salt is derived from a relatively weak acid, this salt, when combined with a source of anions comprising a relatively strong acid may generate a metal salt of the strong acid with the Group VIII metal and a weak acid.

The catalyst system used in the present process is conveniently prepared in a separate step, before the acetylenically unsaturated monomers are added. Preferably the catalyst system is formed in the liquid phase, e.g. by dissolving a salt of a Group VIII metal in a suitable solvent, subsequently adding the other catalyst components or precursors thereof. Suitable solvents include alcohols such as methanol, ethanol, isopropanol, sec. butanol and ethyleneglycol, ketones such as acetone and methylethylketone, ethers such as dimethylether, diethylether, diethyleneglycoldimethylether (diglyme) and esters such as methylpropionate and ethylacetate. In the event that the monomer under ambient conditions is in the liquid state, this monomer may be used as solvent as well.

Further examples of suitable solvents are acetonitrile, N-methylpyrrolidone and dimethylsulphoxide. Mixtures of solvents may also be applied, if so desired.

The acetylenically unsaturated compounds to be polymerized with the process of the invention may be represented by the formula Y-C≡C-X, wherein X and Y each independently represent a hydrogen atom or an optionally substituted hydrocarbylgroup.

Preferred monomers are represented by the formula H C≡C-X wherein X has the aforesaid meaning.

Examples of suitable monomers are acetylene, propyne, phenylacetylene, 3-hydroxypropyne-1 (propargyl alcohol), 4-hydroxybutyne-1, p-tolylacetylene, 1-butyne and p-diethynylbenzene. Mixtures of two or more monomers may also be used, in which case copolymers are formed.

Preferred monomers are acetylene, phenylacetylene, isopropenylacetylene and 3-hydroxypropyne-1.

The process of the invention is conveniently carried out at moderate temperature and pressure conditions. Suitable reaction temperatures are generally in the range of from 0 to 180 °C, preferably in the range of from 0-150 °C. In many cases ambient temperatures suffice for achieving acceptable reaction rates.

Suitable reaction pressures are generally in the range of from 0.1 to 25 bar, preferably in the range of from 1 to 20 bar. Autogenic pressures are most preferred. If desired, the polymerization may be carried out in the additional presence of a solvent. Suitable solvents are, in particular, the solvents mentioned above in connection with the preparation of the catalyst system.

The polymers prepared in the process of the invention exhibit electrically conductive properties. Their conductivity may be enhanced or counteracted by addition of appropriate electron acceptors, such as arsenic pentafluoride or antimonypentafluoride, or of appropriate electrondonors such as alkalimetals, for example lithium or sodium.

The polymers can be made in the form of fibres or thin films and may find use in the manufacture of, inter alia, conductors, semi-conductors or insulating materials.

The invention is illustrated by the following, non-limiting examples:

### Example 1

A catalyst solution was made by dissolving 0.1 mmol palladiumacetate, 0.3 mmol 1,3-bis-(di-tert.butylphosphino)propane and 0.25 mmol methane sulphonic acid in 10 ml methanol, under nitrogen in a glove box.

A 125 ml glass reactor was charged with 50 ml methanol and 15 ml phenylacetylene. At room temperature (ca. 22 °C) 1 ml of the aforesaid catalyst solution was injected in the bottom part of the reactor under a nitrogen blanket. The temperature of the reactor contents rapidly increased to 50-60 °C and instantaneously precipitation of polymer occurred. After about 5 minutes 12 gram of orange-yellow product had been formed. ¹³C NMR analysis of a sample, dissolved in chloroform, showed that the product consisted of polyphenylacetylene.

The calculated reaction rate amounted to more than 100.000 gram polymer per gram palladium and per hour.

### Example 2

The experiment described in Example 1 was repeated, whereby as catalyst 1 ml of a solution of 0.1 mmol palladiumacetate and 0.3 mmol 1,3-bis-(di-tert.butylphosphino) propane in 10 ml methanol was used. Analysis of the product showed that polyphenylacetylene had been formed, the reaction rate being ca. 4000 gram of polymer per gram palladium and per hour.

### Example 3

In the manner as described in Example 1, an experiment was carried out, whereby as catalyst 1 ml. of a solution of 0.1 mmol palladiumacetate, 0.3 mmol 1,3 bis-(di-tert.butylphosphino) propane and 0.25 mmol trifluoromethanesulphonic acid in 10 ml methanol was used. The temperature rapidly increased to 60 °C.

Analysis showed that polyphenylacetylene had been formed, the reaction rate being more than 100.000 gram of polymer per gram palladium and per hour.

### Example A (for comparison only)

The experiment as described in Example 1 was repeated, whereby as catalyst a solution of 0.1 mmol palladium acetate, 0.3 mmol tricyclohexylphosphine and 0.25 mmol trifluoromethanesulphonic acid in 10 ml methanol was used. Subsequently three successive injections were made with 1 ml of catalyst solution, but no polymer formation was observed.

### Example B (for comparison only)

The experiment as described in Example 1 was repeated, whereby as catalyst 1 ml was used of a solution of 0.1 mmol palladiumacetate, 0.6 mmol tri-tert.butylphosphine and 0.25 mmol trifluoromethane-sulphonic acid in 10 ml methanol. No polymer formation occurred.

### Example 4

In the manner as described in Example 1, an experiment was carried out whereby as catalyst 1 ml was used of a solution of 0.1 mmol palladiumacetate, 0.3 mmol 1,3-bis-(di-isopropylphosphino)propane and 0.25 mmol methane sulphonic acid. At 60 °C polyphenylacetylene was formed at a rate of 250 gram polymer per gram palladium and per hour.

### Examples 5-8

In the manner as described in Example 1, four experiments were carried out whereby in the catalyst system different Group VIII metal compounds were present. Four catalyst solutions were prepared containing 0.1 mmol nickelacetate, 0.1 mmol rhodium (dicarbonyl) acetylacetonate, 0.1 mmol platinum di-acetylacetonate and 0.1 mmol ruthenium-di-acetylacetonate, respectively, combined with 0.25 mmol 1,3-bis (di-tert-butylphosphino) propane and 0.25 mmol methane sulphonic acid in 10 ml methanol.

1 ml of each of these solutions was added to 10 ml phenylacetylene in 50 ml methanol. After 24 hours at room temperature, in each case a small amount of polymer had formed.

### Example 9

An autoclave of 300 ml (Hastelloy-C) was charged with 40 ml methanol and 15 ml propyne. Subsequently 10 ml. of a solution of 0.1 mmol palladium acetate, 0.3 mmol 1,3-bis-(tert.butylphosphino) propane and 0.25 mmol methane sulphonic acid in methanol was added.

A rapid polymerization occurred instantaneously, as was indicated by an exotherm of 70 °C. In less than 2 hours 8 gram of polypropyne had been formed. ¹³C NMR analysis of a sample, dissolved in chloroform confirmed the structure 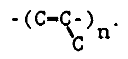 The rate of polymerization was about 50000 gram polymer per gram palladium and per hour.

### Example 10

In the manner as described in Example 1, an experiment was carried out, whereby instead of 15 ml. phenylacetylene, 10 ml. propargylalcohol was used. On injection of 1 ml of the catalyst solution, the temperature rose to 40 °C and instantaneous precipitation of polymer occurred. GLC analysis of residual solution showed that the conversion of propargylalcohol was 30% (in 0.5 hours). By two further injections of 1 ml of catalyst solution the conversion of propargylalcohol increased to 60%. 5 gram Polypropargylalcohol was filtered off and dried at 70 °C in a vacuum oven. The product is insoluble in methanol and dissolves slowly in NMP at 70 °C. The product was characterized by ¹³C solid state NMR analysis.

### Example 11

In the manner as described in Example 10, an experiment was carried out, whereby instead of propargylalcohol, 10 ml of 4-hydroxy butyne-1 was used. Three successive injections with 1 ml of catalyst solution were made, with 0.5 hour intervals. The isotherm was 40 °C. Upon evaporating methanol, 7 grams of polybutynol were recovered. The product which is soluble in methanol has the structure -(C=C(CH₂-CH₂OH)-)ₙ.

### Example 12

A catalyst solution was prepared by dissolving 0.01 mmol palladium acetate, 0.03 mmol 1,3-bis(di-tert.butylphosphino)propane and 0.025 mmol methane sulphonic acid in 50 ml N-methylpyrrolidone (NMP).

Acetylene was bubbled through the solution and after a reaction period of 1.5 hours, 3.5 gram polyacetylene was filtered off.

### Example 13

In the manner as described in Example 1, an experiment was carried out whereby instead of phenylacetylene, 5 ml isopropenylacetylene and instead of methanol, 50 ml of toluene as reaction solvent was used.

Two successive injections with 1 ml of catalyst solution were made. After a total reaction time of 1.5 hour 3.5 gram of polyisopropenyl acetylene was filtered off.

### Example 14

A catalyst solution was prepared by dissolving 0.01 mmol palladiumacetate, 0.03 mmol 1,3-bis(di-tert.butylphosphino) propane and 0.025 mmol methane sulphonic acid in 50 ml N-methylpyrrolidone.

To this solution 2 ml of propargylalcohol was added and acetylene was bubbled through the solution for 1 hour. The temperature increased to 40 °C during the polymerization which was stopped by discontinuing the supply of acetylene.

During the polymerization the viscosity of the mixture increased but for about 1 hour the dark red polymer remained dissolved in NMP. After about 2 to 3 hours a gel developed.

¹³C NMR analysis (MAS solid state) indicates that a copolymer of propargylalcohol and acetylene had been formed.

### Example 15

In the manner as described in Example 1, a catalyst solution was prepared whereby instead of methane sulphonic acid, 0,25 mmol trifluoromethanesulphonic acid was used.

1 ml of catalyst solution was injected into a mixture of 10 ml phenylacetylene and 2.5 ml propargylalcohol.

A rapid polymerization reaction occurred, producing an insoluble polymer at a rate of about 10.000 gram polymer per gram palladium and per hour.

The polymer has a melting point of 220 °C and by ¹³C NMR analysis was indicated to be a copolymer of phenylacetylene and propargylalcohol.

## Claims

1. A process for the polymerization of actylenically unsaturated compounds by contacting the monomer(s) under polymerization conditions with a catalyst system obtainable by combining
a) a source of cations of one or more Group VIII metals
b) a bidentate ligand, containing phosphorus, arsenic and/or antimony and
c) a source of anions

2. A process as claimed in claim 1, characterized in that a catalyst system is used comprising cations of palladium and/or of rhodium

3. A process as claimed in claim 2, characterized in that a catalyst system is used comprising palladium cations.

4. A process as claimed in any of claims 1-3, characterized in that a catalyst system is used comprising a bidentate of the general formula
R¹R²M¹RM²R³R⁴ (I)
wherein each of M¹ and M² independently represents a phosphorus, arsenic or antimony atom, each of R¹, R², R³ and R⁴ independently represents a substituted or non-substituted hydrocarbylgroup and R represents a bivalent organic bridging group containing from 2 to 6 atoms in the bridge.

5. A process as claimed in claim 4, characterized in that in the bidentate of formula (I) M¹ and M² both represent phosphorus atoms and groups R¹, R², R³ and R⁴ represent the same or different substituted or non-substituted aliphatic groups having from 1 to 10 carbon atoms.

6. A process as claimed in any of claims 4-7, characterized in that in the bidentate of formula (I) at least one of R¹, R², R³ and R⁴ represents a tertiary butylgroup.

7. A process as claimed in any of claims 1-6, characterized in that a catalyst system is used comprising anions originating from water, one or more alkanols and/or one or more carboxylic acids.

8. A process as claimed in claim 7, characterized in that the source of anions is an alkanol having from 1 to 8 carbon atoms.

9. A process as claimed in claim 7, characterized in that the source of anions is a carboxylic acid having a pKa of less than 6.

10. A process as claimed in any of claims 1-9, characterized in that an acetylenically unsaturated compound of the formula HC≡C-X is used wherein X represents hydrogen or a phenylgroup or an isopropenyl, a hydroxymethyl or a 1-hydroxyethylgroup.

## Patentansprüche

1. Verfahren zur Polymerisation von acetylenisch ungesättigten Verbindungen, bei dem man das Monomer bzw. die Monomere unter Polymerisationsbedingungen mit einem Katalysatorsystem, das durch Kombination von
a) einer Quelle von Kationen eines oder mehrerer Metalle der Gruppe VIII,
b) einem Phosphor, Arsen und/oder Antimon enthaltenden zweizähnigen Liganden und
c) einer Anionenquelle erhältlich ist, in Berührung bringt.

2. Verfahren nach Anspruch 1, dadurch gekennzeichnet, daß man ein Katalysatorsystem einsetzt, das Palladium- und/oder Rhodiumkationen enthält.

3. Verfahren nach Anspruch 2, dadurch gekennzeichnet, daß man ein Katalysatorsystem einsetzt, das Palladiumkationen enthält.

4. Verfahren nach einem der Ansprüche 1-3, dadurch gekennzeichnet, daß man ein Katalysatorsystem einsetzt, das einen zweizähnigen der allgemeinen Formel
R¹R²M¹RM²R³R⁴ (I),
worin M¹ und M² jeweils unabhängig voneinander ein Phosphor-, Arsen- oder Antimonatom, R¹, R², R³ und R⁴ jeweils unabhängig voneinander eine gegebenenfalls substituierte Kohlenwasserstoffgruppe und R eine zweiwertige organische Brückengruppe mit 2 bis 6 Atomen in der Brücke bedeuten.

5. Verfahren nach Anspruch 4, dadurch gekennzeichnet, daß man einen zweizähnigen der Formel (I) einsetzt, bei der sowohl M¹ als auch M² Phosphoratome und die Gruppen R¹, R², R³ und R⁴ gleiche oder verschiedene gegebenenfalls substituierte aliphatische Gruppen mit 1 bis 10 Kohlenstoffatomen bedeuten.

6. Verfahren nach einem der Ansprüche 4-7, dadurch gekennzeichnet, daß man einen zweizähnigen der Formel (I) einsetzt, bei der mindestens eine der Gruppen R¹, R², R³ und R⁴ eine tertiäre Butylgruppe bedeutet.

7. Verfahren nach einem der Ansprüche 1-6, dadurch gekennzeichnet, daß man ein Katalysatorsystem einsetzt, das aus Wasser, einem oder mehreren Alkanolen und/oder einer oder mehreren Carbonsäuren stammende Anionen enthält.

8. Verfahren nach Anspruch 7, dadurch gekennzeichnet, daß man als Anionenquelle ein Alkanol mit 1 bis 8 Kohlenstoffatomen einsetzt.

9. Verfahren nach Anspruch 7, dadurch gekennzeichnet, daß man als Anionenquelle eine Carbonsäure mit einem pKa-Wert unter 6 einsetzt.

10. Verfahren nach einem der Ansprüche 1-9, dadurch gekennzeichnet, daß man eine acetylenisch ungesättigte Verbindung der Formel HC≡C-X, worin X Wasserstoff oder eine Phenylgruppe oder eine Isopropenyl-, eine Hydroxymethyl- oder eine 1-Hydroxyethylgruppe bedeutet, einsetzt.

## Revendications

1. Procédé de polymérisation de composés acétyléniquement insaturés par la mise en contact du ou des monomères, dans des conditions de polymérisation, avec un système catalytique pouvant être obtenu en combinant
a) une source de cations d'un ou plusieurs métaux du groupe VIII,
b) un ligand bidentate, contenant du phosphore, de l'arsenic et/ou de l'antimoine et
c) une source d'anions.

2. Procédé suivant la revendication 1, caractérisé en ce que le système catalytique utilisé comprend des cations de palladium et/ou de rhodium.

3. Procédé suivant la revendication 2, caractérisé en ce que le système catalytique utilisé comprend des cations de palladium.

4. Procédé suivant l'une quelconque des revendications 1 à 3, caractérisé en ce que le système catalytique utilisé comprend un bidentate de la formule générale
R¹R²M¹RM²R³R⁴ (I)
dans laquelle chacun des symboles M¹ et M² représente indépendamment un atome de phosphore, d'arsenic ou d'antimoine, chacun des symboles R¹, R², R³ et R⁴ représente indépendamment un radical hydrocarbyle substitué ou non substitué et R représente un groupe de pontage organique bivalent contenant de 2 à 6 atomes dans le pont.

5. Procédé suivant la revendication 4, caractérisé en ce que, dans le bidentate de la formule (I), M¹ et M² représentent tous deux des atomes de phosphore et les symboles R¹, R², R³ et R⁴ représentent des radicaux aliphatiques, substitués ou non substitués, identiques ou différents, comportant de 1 à 10 atomes de carbone.

6. Procédé suivant l'une quelconque des revendications 4 à 7, caractérisé en ce que, dans le bidentate de la formule (I), au moins l'un des symboles R¹, R², R³ et R⁴ représente un radical butyle tertiaire.

7. Procédé suivant l'une quelconque des revendications 1 à 6, caractérisé en ce que l'on utilise un système catalytique comprenant des anions tirant leur origine de l'eau, d'un ou plusieurs alcanols et d'un ou plusieurs acides carboxyliques.

8. Procédé suivant la revendication 7, caractérisé en ce que la source d'anions est un alcanol possédant de 1 à 8 atomes de carbone.

9. Procédé suivant la revendication 7, caractérisé en ce que la source d'anions est un acide carboxylique possédant un pKa inférieur à 6.

10. Procédé suivant l'une quelconque des revendications 1 à 9, caractérisé en ce que l'on utilise un composé acétyléniquement insaturé de la formule HC=C-X, dans laquelle X représente un atome d'hydrogène ou un radical phényle, ou un radical isopropényle, hydroxyméthyle ou 1-hydroxyéthyle.
